# EUROPEAN PATENT APPLICATION

(11) **EP 4 659 576 A1**
(43) Date of publication of application: **10.12.2025**
(21) Application number: 24770654.2
(22) Date of filing: 05.03.2024
(51) Int. Cl.: A01M 1/00, G01V 8/10

(54) **PROCESSING DEVICE, PROCESSING METHOD, AND PROGRAM**

(30) Priority: 13.03.2023 JP 2023038835
(71) Applicant: OMRON Corporation, Kyoto 600-8530 (JP)
(72) Inventor: WANG, Ying, Kyoto-shi, Kyoto 600-8530 (JP)
(74) Representative: Isarpatent
(86) International application number: PCT/JP2024/008365
(87) International publication number: WO 2024/190544

(57) **Abstract**

To prevent overlooking detection of pests or diseases during work on plants. A processing device includes: an imaging unit that images a plant while a worker is performing work on the plant to generate an image of the plant; a detection unit that analyzes the image of the plant to detect the presence or absence of a pest or disease on the plant and outputs a detection result; and a calculation unit that calculates a detection position where the presence or absence of the pest or disease on the plant is detected as three-dimensional position information including a planar position and a height position.

## Description

### TECHNICAL FIELD

The present invention relates to a processing device, a processing method, and a program.

### BACKGROUND OF INVENTION

In conventional pest and disease detection systems, workers regularly observe target plants (crops) using a camera of a mobile terminal or a fixed camera. Therefore, it is necessary to secure a certain amount of work time and workers. In order to reduce the burden of such pest and disease detection work and increase the efficiency of the work, a system capable of detecting pests or diseases together with normal cultivation management (for example, training, bud picking, and the like) by utilizing wearable devices has been proposed. For example, Patent Literature 1 discloses a technology that uses a wearable terminal to detect the state of pests or diseases in crops and support countermeasures against the state of pests or diseases in crops.

### CITATION LIST

### PATENT LITERATURE

Patent Literature 1: Japanese Patent No. 7039766

### SUMMARY

### TECHNICAL PROBLEM

In the related art, the results of detection of the presence or absence of pests or diseases on plants are recorded on a two-dimensional map. In addition, to improve work efficiency, wearable cameras and the like are used to detect pests or diseases from the worker's line of sight during cultivation work such as leaf picking. However, in much of cultivation work, workers do not observe the entire plant, so that only parts of the plant are actually captured in the images. Therefore, for example, when cultivation work is performed on the lower parts of a plant and no pests or diseases are detected in the images of the lower parts of the plant, it is determined that the plant is free of pests or diseases and no images of the higher parts of the plant are captured. However, even when pests or diseases are not detected in images of the lower parts of the plant, they may occur in the higher parts of the plant, and there is a concern that the detection of pests or diseases will be overlooked because the entire plant is not being observed.

The present invention has been made in consideration of the above-mentioned circumstances, and an object of the present invention is to provide a technique for preventing overlooking the detection of pests or diseases during work on plants.

### SOLUTION TO PROBLEM

A processing device according to one aspect of the present invention is a processing device including: an imaging unit that images a plant while a worker is performing work on the plant to generate an image of the plant; a detection unit that analyzes the image of the plant to detect the presence or absence of a pest or disease on the plant and outputs a detection result; and a calculation unit that calculates a detection position where the presence or absence of the pest or disease on the plant is detected as three-dimensional position information including a planar position and a height position.

According to the processing device, the detection position where the presence or absence of the pest or disease on the plant is detected is calculated as three-dimensional position information including a planar position and a height position. For example, even if no pest or disease is detected from an image of a lower part of the plant, the presence or absence of the pest or disease on the plant can be detected by analyzing an image of a higher part of the plant, thereby making it possible to prevent overlooking the detection of the pest or disease while working on the plant.

In the processing device, the calculation unit may acquire imaging position information indicating a position where the plant is imaged and work type information indicating a type of the work, determine the planar position based on the imaging position information, and determine the height position based on the work type information.

In the processing device, the imaging unit may capture image the plant and an object while the worker is performing the work on the plant, and the calculation unit may detect the object from the image of the plant and an image of the object, and determine the height position based on the object.

The processing device may further include a storage unit in which the detection result and the three-dimensional position information are stored in association with each other, in which the detection unit may determine whether to detect the presence or absence of the pest or disease on the plant based on the detection result within a time frame or a period prior to a current time stored in the storage unit and the three-dimensional position information associated with the detection result within the time frame or the period. In the processing device, the imaging unit may be a wearable camera worn by the worker.

The present invention can also be regarded as a processing method including at least a portion of the processing described above, a program for causing a computer to execute at least a portion of the processing described above, or a computer-readable recording medium having such a program recorded in a non-transitory manner. The configurations and processing described above can be combined with each other to configure the present invention as long as no technical contradiction arises.

### ADVANTAGEOUS EFFECTS OF INVENTION

According to the present invention, it is possible to provide a technique for preventing overlooking the detection of pests or diseases during work on plants.

### BRIEF DESCRIPTION OF THE DRAWINGS

[Fig. 1] FIG. 1 is a diagram illustrating an overall configuration of a processing system.
[Fig. 2] FIG. 2 is a diagram illustrating a schematic configuration of a terminal device and a server.
[Fig. 3] FIG. 3 is a flowchart illustrating a first example of a work determination process.
[Fig. 4] FIG. 4 is a diagram illustrating an example of work history information.
[Fig. 5] FIG. 5A and FIG. 5B are diagrams illustrating an example of work history information.
[Fig. 6] FIG. 6 is a diagram illustrating an example of a work determination table.
[Fig. 7] FIG. 7A and FIG. 7B are diagrams illustrating an example of a work determination table.
[Fig. 8] FIG. 8 is a flowchart illustrating a second example of the work determination process.
[Fig. 9] FIG. 9 is a diagram illustrating an example of work history information.
[Fig. 10] FIG. 10 is a diagram illustrating an example of a work determination table.
[Fig. 11] FIG. 11 is a block diagram illustrating a functional configuration of a processing system.

### DESCRIPTION OF EMBODIMENTS

Hereinafter, application examples and embodiments will be described with reference to the drawings. The application examples and embodiments described below are aspects of the present application, and do not limit the scope of rights of the present application.

### <Application Example>

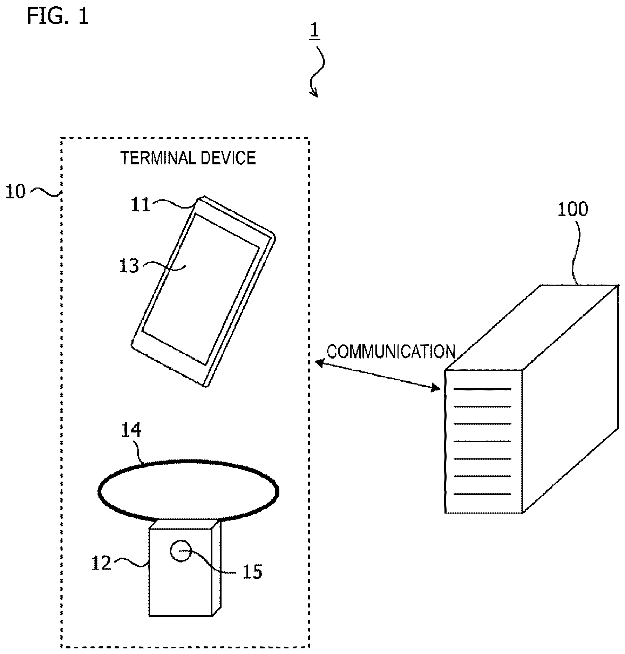

FIG. 1 is a diagram illustrating an overall configuration of a processing system 1 to which the present invention is applied. The processing system 1 according to an embodiment includes a terminal device (worker terminal) 10 and a server 100. The worker uses the terminal device 10 which is a portable information device. The terminal device 10 is a device capable of communicating with the server 100, and includes a mobile terminal 11 such as a smartphone or a tablet terminal, and a wearable terminal 12. The mobile terminal 11 has a screen 13 such as a liquid crystal display or an organic light emitting diode display. The wearable terminal 12 is, for example, a neck-hanging type terminal. The wearable terminal 12 has a wearing device 14 that can be worn around the worker's neck, and a camera (wearable camera) 15. The wearable terminal 12 illustrated in FIG. 1 is a neck-hanging type wearable terminal, but is not limited thereto example and may be a glasses-type wearable terminal. The server 100 is, for example, configured by a server computer and is placed on a cloud. The server 100 may be configured by a plurality of server computers. For example, the server 100 may be realized by a plurality of server computers in different locations on a network working together.

A worker works on plants (crops) in a farm field, which is an example of a workplace for agriculture or the like. Examples of types of work performed on plants include leaf picking, flower thinning, bud picking, training, leaf removal, bud removal, pinching, watering, additional fertilization, pesticide application, and harvesting, but the present invention is not limited thereto. The worker uses the terminal device 10 when performing work on the plants. Specifically, the worker starts up the mobile terminal 11 and the wearable terminal 12 before working on the plant, and carries the mobile terminal 11 and the wearable terminal 12 while working on the plant. The worker wears the wearable terminal 12 with the camera 15 of the wearable terminal 12 facing forward so that the camera 15 of the wearable terminal 12 can capture an image of the plant.

In response to an instruction from the server 100, the terminal device 10 uses the camera (wearable camera) 15 of the wearable terminal 12 to capture an image of the plant while working on plants. The image of the plant captured by the camera 15 of the wearable terminal 12 is sent to the server 100 as image data. The image may be a moving image or a still image. The server 100 stores the image data of the plants in a storage unit such as a database (DB). The server 100 (using the AI detection function) detects the presence or absence of pests or diseases on the plant by analyzing the image data of the plant, and responds with the detection result to the terminal device 10.

Pests or diseases may occur at a low position of the plant, or at a high position of the plant. Therefore, the positions of pests or diseases on the plant need to be ascertained in terms of their positions in planar directions (XY directions) (planar positions) and their positions in the height direction (Z direction) (height positions). The processing system 1 according to the present embodiment images a plant while a worker is performing work on the plant to generate an image of the plant, analyzes the image of the plant to detect the presence or absence of pests or diseases on the plant, outputs the detection result, and calculates a detection position where the presence or absence of pests or diseases on the plant is detected as three-dimensional position information including a planar position and a height position. The planar position may be XY coordinates on an XY plane, or XY coordinates on an XY plane when the inclined surface is viewed from above (in a plan view in the Z-axis direction), or the like. The planar position may also be the position of a section (for example, a ridge section, a field section, or the like) in a farm field. The height position may be a position in the height direction from the ground, or the position of each section (for example, an upper section, a lower section, or the like) when a space is divided into a plurality of sections in the height direction. In the related art, the presence or absence of detected pests or diseases was only indicated on a two-dimensional map, but according to the present embodiment, it is possible to handle three-dimensional maps and the like. For example, even if no pests or diseases are detected from images of the lower parts of the plant, the presence or absence of pests or diseases on the plant can be detected by analyzing images of the higher parts of the plant, thereby making it possible to prevent overlooking the detection of pests or diseases while working on plants. As a result, pests or diseases can be detected efficiently and at an early stage. In addition, because workers can detect the presence or absence of pests or diseases on plants while performing a minimum amount of work, there is no need to secure personnel and time to prevent overlooking the detection of pests or diseases, thereby reducing the burden on workers.

### (Description of Embodiment)

The terminal device 10 and the server 100 illustrated in FIG. 1 each include an arithmetic unit such as a central processing unit (CPU), a storage unit for storing various types of data such as programs, and a communication interface used for communication. The storage unit is, for example, a memory (volatile storage device) such as a dynamic random access memory (DRAM) or a static random access memory (SRAM), or a storage (non-volatile storage device) such as a hard disk drive (HDD) or a solid state drive (SSD). The communication interface is realized by a communication unit such as a network card. The arithmetic units of the terminal device 10 and the server 100 execute programs stored in the storage units, for example, to realize various operations. The memories of the terminal device 10 and the server 100 may be realized by removable storage media.

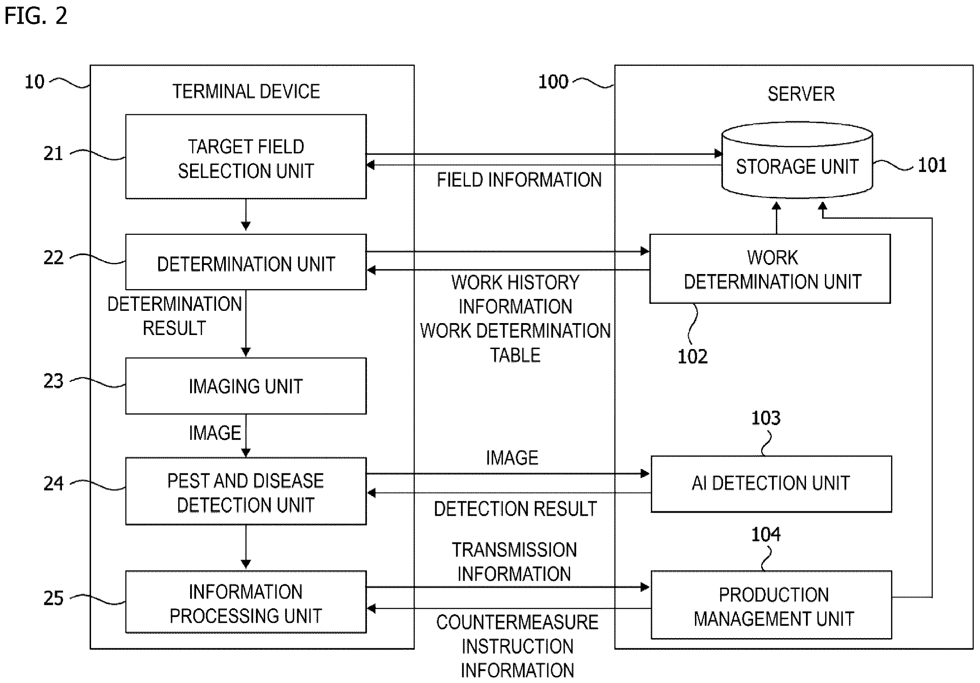

FIG. 2 is a diagram illustrating a schematic configuration of the terminal device 10 and the server 100. The terminal device 10 includes a target field selection unit 21, a determination unit 22, an imaging unit 23, a pest and disease detection unit 24, and an information processing unit 25. The server 100 includes a storage unit 101, a work determination unit 102, an AI detection unit 103, and a production management unit 104. The target field selection unit 21 selects a target field by referring to field information from the storage unit 101 of the server 100. The target field selection unit 21 sends field data relating to the selected target field to the determination unit 22. The imaging unit 23 images the plant to generate an image of the plant.

### (First Example of Work Determination Process)

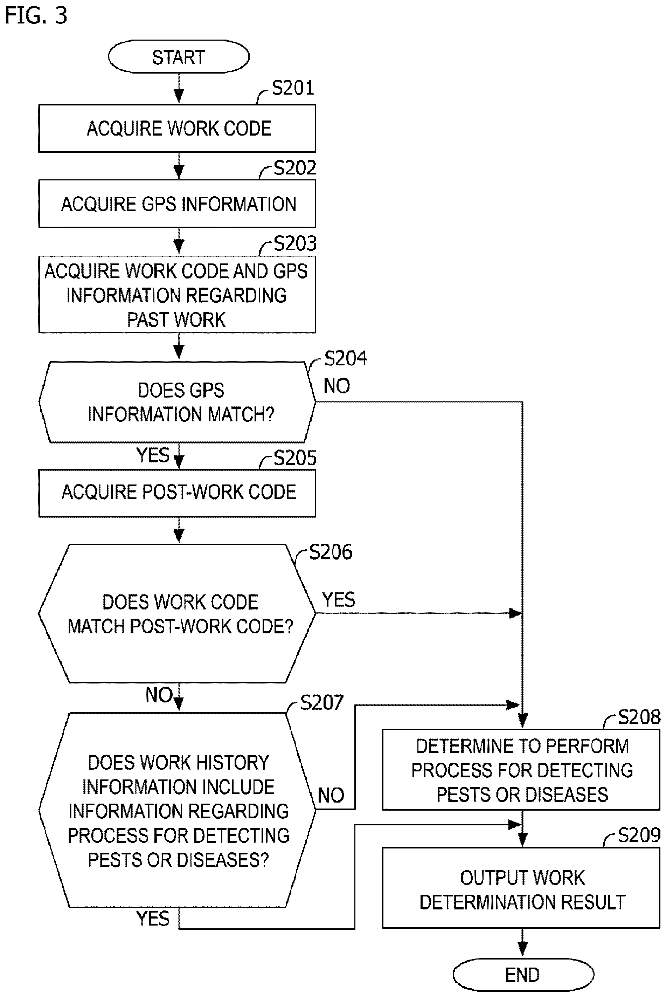

When a target field is selected by the target field selection unit 21, the determination unit 22 performs a work determination process using the work determination unit 102 of the server 100. FIG. 3 is a flowchart illustrating a first example of the work determination process performed by the determination unit 22. In step S201, the determination unit 22 acquires a work code indicating work to be performed on a plant. The worker may operate the terminal device 10 to input the work code into the terminal device 10, and the work determination unit 102 may acquire the work code from the terminal device 10. For example, when work on plants is managed by schedule information and the schedule information and work codes are recorded in the storage unit 101, the determination unit 22 may acquire the work code from the storage unit 101 via the work determination unit 102.

In step S202, the determination unit 22 acquires global positioning system (GPS) information of the terminal device 10. The terminal device 10 receives GPS signals transmitted from a plurality of GPS satellites, executes positioning calculation processing based on the plurality of received GPS signals, and acquires GPS information of the terminal device 10. The mobile terminal 11 or the wearable terminal 12 may acquire GPS information.

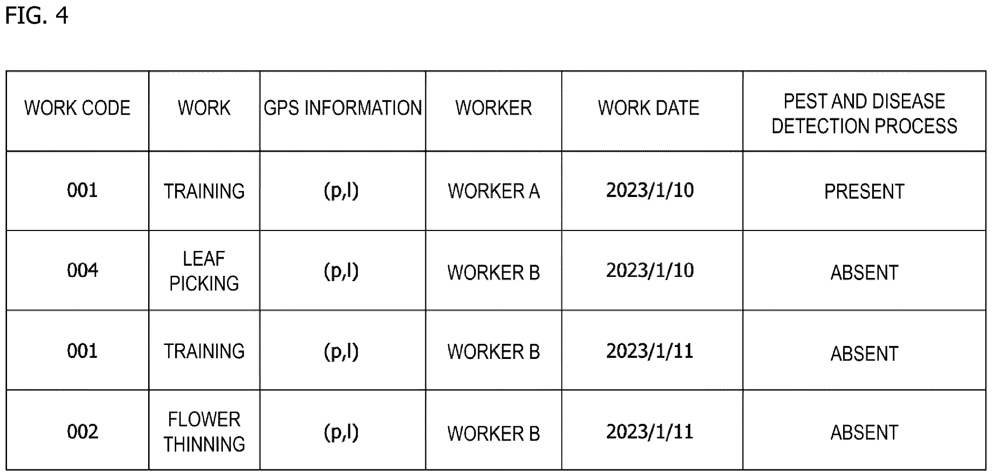

In step S203, the determination unit 22 refers to the work history information stored in the storage unit 101 and acquires work codes and GPS information regarding work performed on plants from the current time until a predetermined time frame or a predetermined period. That is, the determination unit 22 acquires the work code and GPS information regarding past work on the plant. The determination unit 22 acquires the work history information from the storage unit 101 via the work determination unit 102. The user can preset a predetermined time frame, such as 24 hours (one day), 48 hours (two days), and the like. FIG. 4 is a diagram illustrating an example of work history information. The work history information includes "work code," "work," "GPS information," "worker," "work date," and "pest and disease detection process." "Work" in FIG. 4 indicates the type of work that a worker performs on a plant. When a process for detecting pests or diseases on the plant has been performed, "present" is recorded in the "pest and disease detection process" field in FIG. 4, and when a process for detecting pests or diseases on the plant has not been performed, "absent" is recorded in the "pest and disease detection process" field in FIG. 4. For example, in FIG. 4, a work code (001), work (training), GPS information (p, l), a worker (worker A), a work date (2023/1/10), and a pest and disease detection process (present) are associated with each other. Information such as the target field, the presence or absence and type of pests or diseases, and the position of pests or diseases within the image of the plant may be recorded in the work history information.

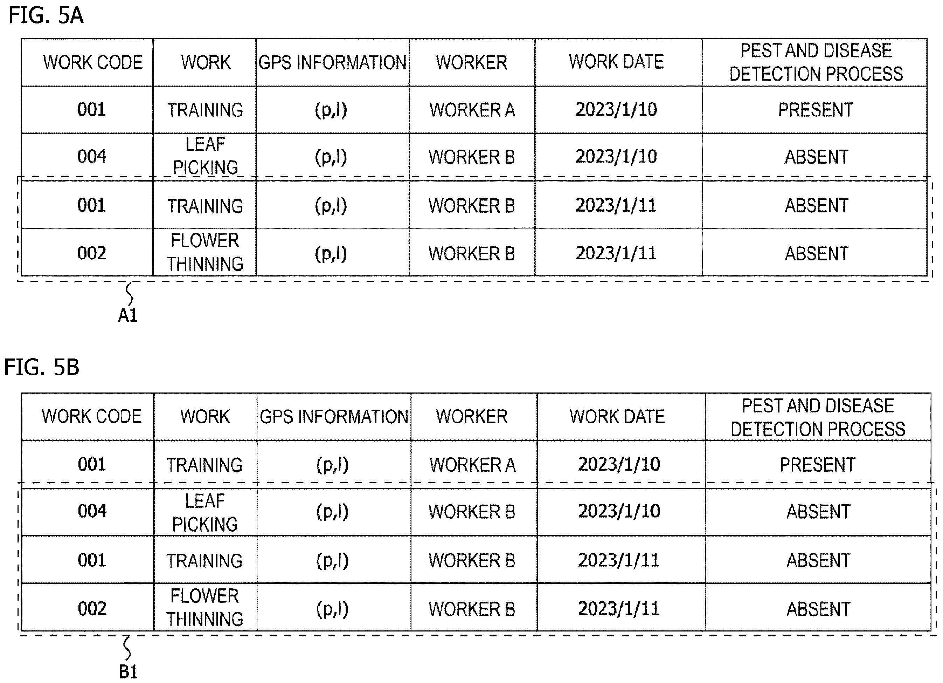

For example, when the predetermined time frame is 24 hours (one day), the determination unit 22 acquires the work code and the GPS information within the frame indicated by a dotted line A1 in FIG. 5A. For example, when the predetermined time frame is 48 hours (two days), the determination unit 22 acquires the work code and the GPS information within the frame indicated by a dotted line B1 in FIG. 5B. In the example illustrated in FIG. 5B, since the training work in the first row and the training work in the third row overlap, the determination unit 22 does not acquire the work code and GPS information in the first row.

In step S204, the determination unit 22 determines whether the GPS information acquired in step S202 matches the GPS information acquired in step S203. When the GPS information acquired in step S202 matches the GPS information acquired in step S203 (S204: YES), the process proceeds to step S205. When the GPS information acquired in step S202 does not match the GPS information acquired in step S203 (S204: NO), the process proceeds to step S208. When a plurality of pieces of GPS information are acquired in step S203, the determination unit 22 determines whether the GPS information acquired in step S202 matches each piece of GPS information acquired in step S203. When the GPS information acquired in step S202 matches at least one of the plurality of pieces of GPS information acquired in step S203 (S204: YES), the process proceeds to step S205. When the GPS information acquired in step S202 does not match each piece of GPS information acquired in step S203 (S204: NO), the process proceeds to step S208.

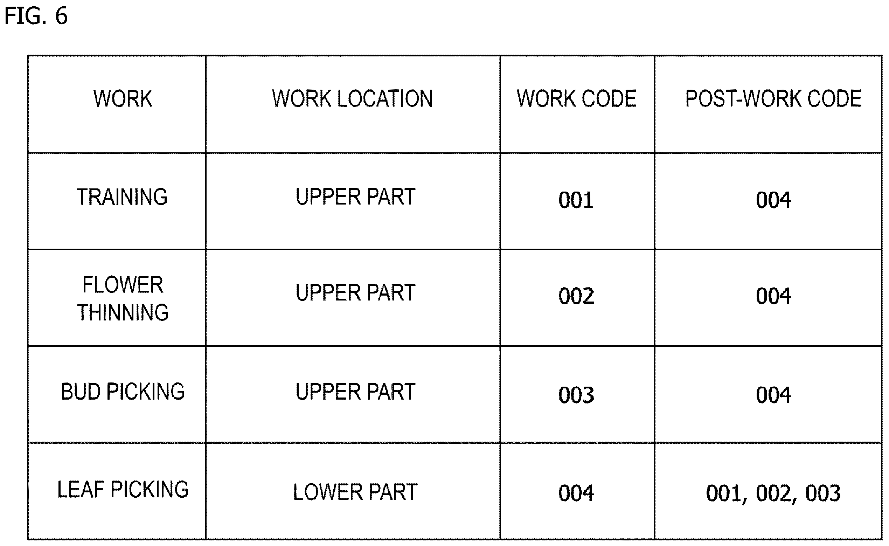

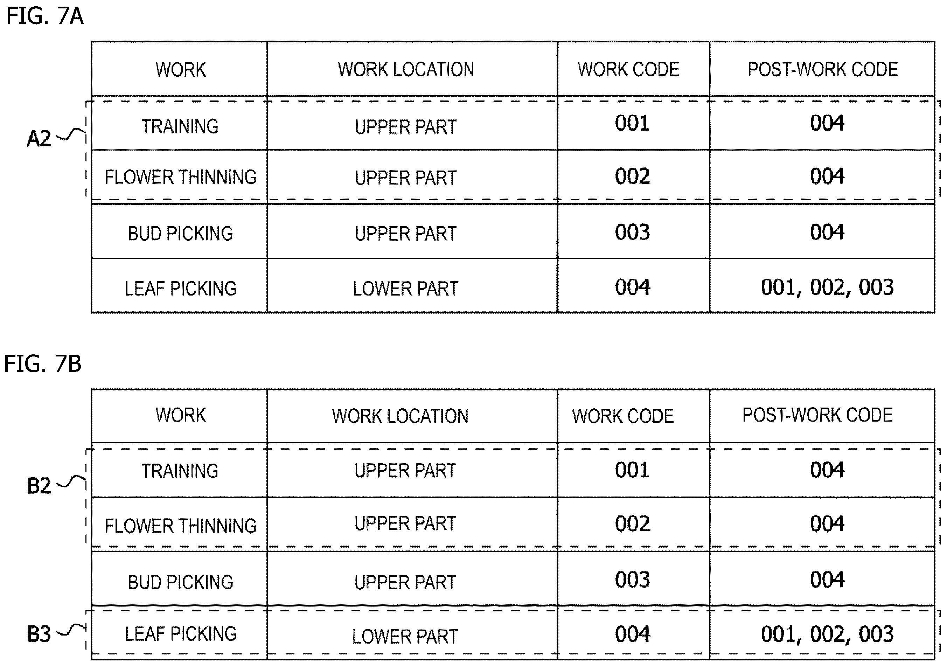

In step S205, the determination unit 22 acquires, from the work determination table stored in the storage unit 101, a post-work code corresponding to the work code acquired in step S203. The determination unit 22 acquires the work determination table from the storage unit 101 via the work determination unit 102. FIG. 6 is a diagram illustrating an example of the work determination table. The work determination table includes "work type," "work location," "work code," and "post-work code." "Work" in FIG. 6 indicates the type of work that a worker performs on a plant. The "work location" in FIG. 6 is a work location of the worker in the height direction, and indicates the main location where the worker performed work on the plant. The "upper part" in the "work location" field in FIG. 6 indicates that the worker performed work on the upper part of the plant. The "lower part" in the "work location" field in FIG. 6 indicates that the worker performed work on the lower part of the plant. For example, when the determination unit 22 acquires work codes (001 and 002) within the frame indicated by the dotted line A1 in FIG. 5A in step S203, the determination unit 22 acquires a post-work code (004) within the frame indicated by a dotted line A2 in FIG. 7A. For example, when the determination unit 22 acquires work codes (001, 002, and 004) within the frame indicated by the dotted line B1 in FIG. 5B in step S203, the determination unit 22 acquires post-work codes (001, 002, 003, and 004) within the frames indicated by dotted lines B2 and B3 in FIG. 7B.

In step S206, the determination unit 22 determines whether the work code acquired in step S201 matches the post-work code acquired in step S205. When the work code acquired in step S201 matches the post-work code acquired in step S205 (step S206: YES), the process proceeds to step S208. When the work code acquired in step S201 does not match the post-work code acquired in step S205 (step S206: NO), the process proceeds to step S207.

An example of the process in step S206 will be described. For example, when the work code (004) is acquired in step S201, and the post-work code (004) within the frame indicated by the dotted line A2 in FIG. 7A is acquired in step S205, the work code (004) and the post-work code (004) match. In this case, the process proceeds to step S208. For example, when the work code (003) is acquired in step S201, and the post-work code (004) within the frame indicated by the dotted line A2 in FIG. 7A is acquired in step S205, the work code (003) and the post-work code (004) do not match. In this case, the process proceeds to step S207.

Another example of the process in step S206 will be described. For example, when the work code (004) is acquired in step S201, and the post-work codes (001, 002, 003, and 004) within the frames indicated by the dotted lines B2 and B3 in FIG. 7B are acquired, the work code (004) and the post-work code (004) match. However, the work code (004) acquired in step S201 matches the work code (004) within the frame indicated by the dotted line B1 in FIG. 5B, and is included in the work history information. In this case, the process proceeds to step S209.

In step S207, the determination unit 22 determines whether the work history information includes information indicating that a process for detecting pests or diseases has been performed. When the work history information includes information indicating that a process for detecting pests or diseases has been performed (S207: YES), the process proceeds to step S209. When the work history information does not include information indicating that a process for detecting pests or diseases has been performed (S207: NO), the process proceeds to step S208. For example, when the determination unit 22 acquires the work codes (001 and 002) within the frame indicated by the dotted line A1 in FIG. 5A in step S203, the work history information corresponding to the work codes (001 and 002) does not include information indicating that a process for detecting pests or diseases has been performed. In this case, the process proceeds to S208.

In step S208, the determination unit 22 determines to perform a process for detecting pests or diseases. In step S209, the determination unit 22 outputs a work determination result. The work determination result includes information indicating whether a process for detecting pests or diseases is to be performed or whether a process for detecting pests or diseases is not to be performed.

The imaging unit 23 starts imaging the plant based on the work determination result output from the determination unit 22, thereby generating an image of the plant while the worker is performing work on the plant.

The pest and disease detection unit 24 uses the AI detection unit 103 of the server 100 to detect the presence or absence of pests or diseases on the plant based on the work determination result output from the determination unit 22, and outputs a detection result of the presence or absence of pests or diseases on the plant (hereinafter simply referred to as a "detection result"). The pest and disease detection unit 24 sends an image of the plant to the AI detection unit 103. The AI detection unit 103 stores the image of the plant in the storage unit 101. The AI detection unit 103 analyzes the image of the plant to detect the presence or absence of pests or diseases on the plant, and sends the detection result to the pest and disease detection unit 24. The pest and disease detection unit 24 outputs the detection result received from the AI detection unit 103. The AI detection unit 103 ascertains the presence or absence and type of pests or diseases on the plant from the image of the plant, and sends the detection result of the presence or absence of pests or diseases on the plant to the pest and disease detection unit 24. The detection result includes information such as the date and time, the target field, the presence or absence and type of pests or diseases, the detection position where the presence or absence of pests or diseases on the plant is detected, and the position of the pests or diseases in the image of the plant. The AI detection unit 103 calculates the detection position where the presence or absence of pests or diseases on the plant is detected as three-dimensional position information including a planar position and a height position.

The information processing unit 25 executes various processes based on the detection result output from the pest and disease detection unit 24. The information processing unit 25 creates transmission information including GPS information, a work code, a work location, a detection result, and the like, and sends the transmission information to the production management unit 104 of the server 100. The production management unit 104 updates the work history information stored in the storage unit 101 based on the transmission information. Furthermore, the information processing unit 25 may notify or inform the worker of the work location, the detection result, and the like. The work location, the detection result, and the like may be displayed on the screen 13 of the mobile terminal 11, or the work location, the detection result, and the like may be output by voice from the mobile terminal 11. This enables the worker to check the work location, the detection result, and the like.

The production management unit 104 creates instruction information based on the information transmitted from the information processing unit 25 and sends the instruction information to the information processing unit 25. The instruction information may include countermeasure instruction information for supporting countermeasures against the state of pests or diseases. The countermeasure instruction information may include instructions such as pesticide application, fertilization, or removal, and may also include information designating pesticide application locations such as locations or areas within the target field where pesticide application is to be performed, as well as the type and amount of pesticide to be applied.

The instruction information may include work instruction information for providing instructions related to the next work to be performed. The work instruction information may include a work code for the next work to be performed, a work location (planar position), a work timing, and the like. The production management unit 104 may identify a three-dimensional position where no detection of the presence or absence of pests or diseases on the plant has been performed from the current time until a predetermined time frame, based on the information transmitted from the information processing unit 25 and the work history information stored in the storage unit 101. The production management unit 104 may determine a work code and a work location (planar position) for the next work to be performed based on the identified three-dimensional position. The terminal device 10 notifies the worker of the work location (planar position) for the next work to be performed, so that the worker can recognize the next work to be performed. For example, in a system that utilizes AI to present optimal work to a worker based on information collected from various sensors, it is possible to provide the next work to be performed to the worker as a work recommendation. In step S201 of the flowchart in FIG. 3, the determination unit 22 acquires a work code included in the work instruction information. This enables a worker to perform work on a plant in a three-dimensional position where no detection of the presence or absence of pests or diseases on the plant has been performed from the current time until a predetermined time frame, and to detect the presence or absence of pests or diseases on the plant.

### (Second Example of Work Determination Process)

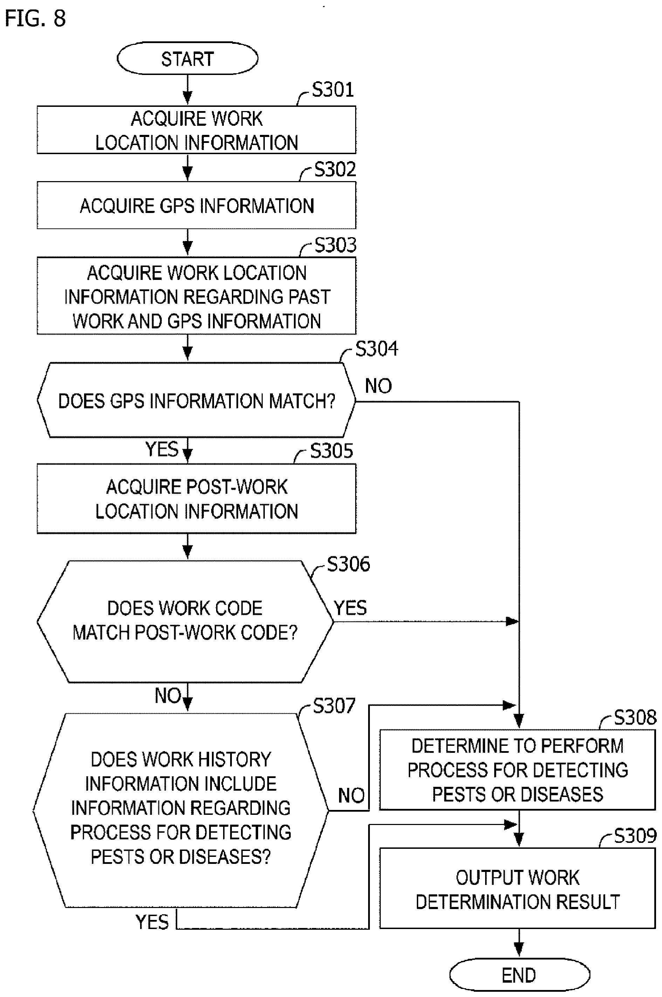

FIG. 8 is a flowchart illustrating a second example of the work determination process performed by the determination unit 22. Before the flowchart illustrated in FIG. 8 starts, the imaging unit 23 starts imaging to image the plants and objects while a worker is performing work on the plants, thereby generating images of the plants and objects. The determination unit 22 sends the images of the plants and objects to the AI detection unit 103. The AI detection unit 103 detects an object from the images of the plants and objects, and determines a work location of the worker in the height direction based on the height of the detected object. The object is used as a height mark. The object may be an installation such as a pole or a pylon installed on the ground. The object may have a color that differs from the color of the surrounding plant in which the object is placed. The object may be a marker attached to an installation such as a pole or a pylon installed on the ground. For example, an object may be placed at a predetermined height from the ground, and the AI detection unit 103 may identify whether the worker is performing work at a higher position than the object or a lower position than the object, thereby determining the work location of the worker in the height direction. Additionally, information regarding height may be added to the object. The AI detection unit 103 may ascertain the height of an object from the ground by reading information regarding height added to the object.

In step S301, the determination unit 22 acquires work location information from the AI detection unit 103. The work location information includes the work location of the worker in the height direction. In step S302, the determination unit 22 acquires GPS information of the terminal device 10.

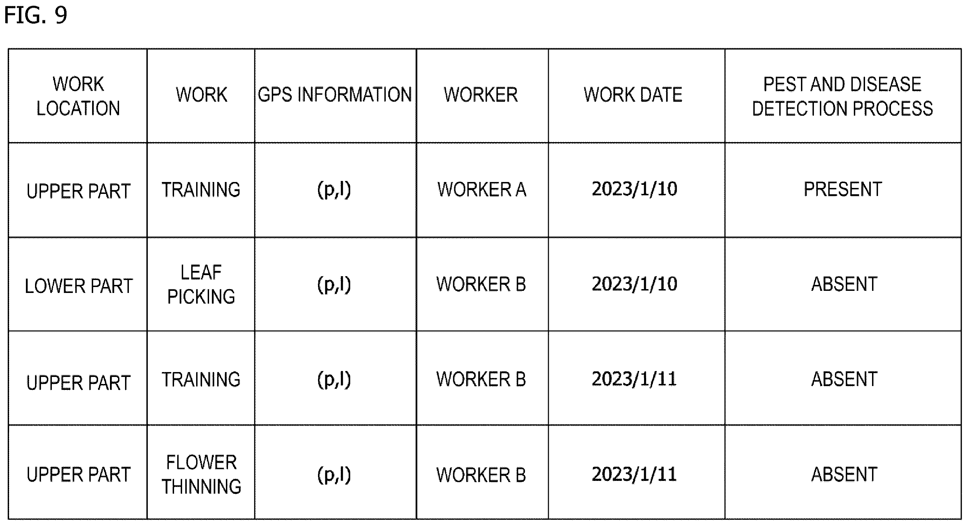

In step S303, the determination unit 22 refers to the work history information stored in the storage unit 101 and acquires work locations and GPS information regarding work performed on plants from the current time until a predetermined time frame or a predetermined period. That is, the determination unit 22 acquires the work location and GPS information regarding past work on the plant. The determination unit 22 acquires the work history information from the storage unit 101 via the work determination unit 102. The user can preset a predetermined time frame, such as 24 hours (one day), 48 hours (two days), and the like. FIG. 9 is a diagram illustrating an example of work history information. The work history information includes "work location," "work," "GPS information," "worker," "work date," and "pest and disease detection process." When the AI detection unit 103 determines from the image of the plant that the work location of the worker in the height direction is the upper part, "upper part" is recorded in the "work location" field in FIG. 9. When the AI detection unit 103 determines from the image of the plant that the work location of the worker in the height direction is the lower part, "lower part" is recorded in the "work location" field in FIG. 9.

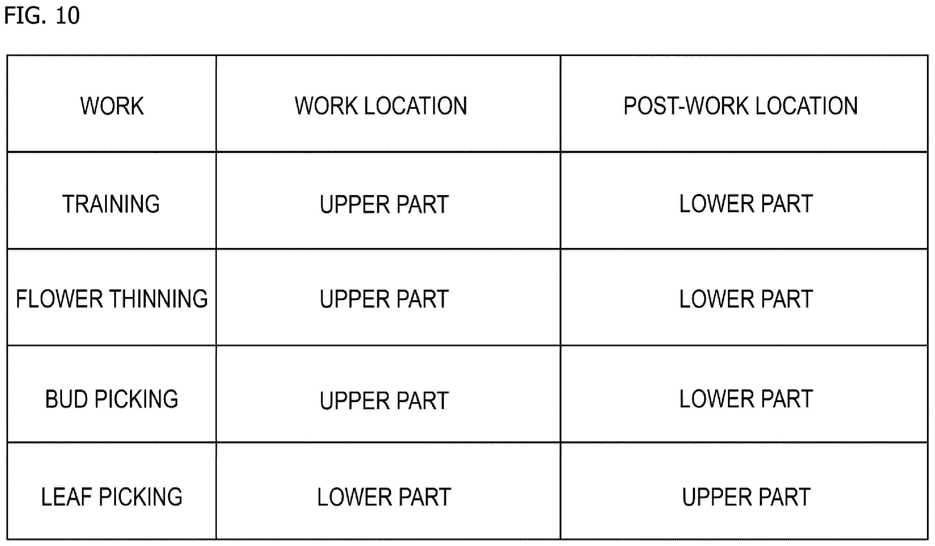

The process of step S304 is similar to the process of step S204, and therefore a description thereof will be omitted. In step S305, the determination unit 22 acquires, from the work determination table stored in the storage unit 101, a post-work location corresponding to the work location acquired in step S303. The determination unit 22 acquires the work determination table from the storage unit 101 via the work determination unit 102. FIG. 10 is a diagram illustrating an example of the work determination table. The work determination table includes "work location" and "post-work location."

In step S306, the determination unit 22 determines whether the work location included in the work location information acquired in step S301 matches the post-work location acquired in step S305. When the work location included in the work location information acquired in step S301 matches the post-work location acquired in step S305 (step S306: YES), the process proceeds to step S308. When the work location included in the work location information acquired in step S301 does not match the post-work location acquired in step S305 (step S306: NO), the process proceeds to step S307. The processes of steps S307 to S309 are similar to the processes of steps S207 to S209, and therefore a description thereof will be omitted.

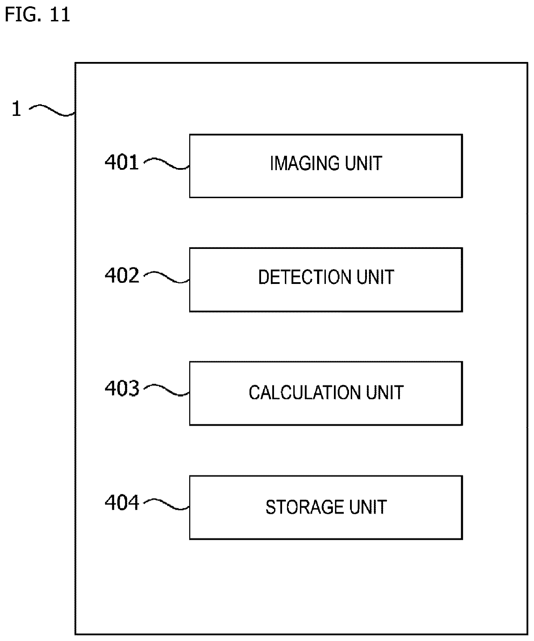

FIG. 11 is a block diagram illustrating a functional configuration of the processing system 1. The processing system 1 illustrated in FIG. 11 includes an imaging unit 401, a detection unit 402, a calculation unit 403, and a storage unit 404. The functions related to the processing system 1 illustrated in FIG. 11 may be provided by the terminal device 10 and the server 100 operating in cooperation with each other. Furthermore, the functions related to the processing system 1 illustrated in FIG. 11 may be provided by the terminal device 10 operating independently. The functions of the processing system 1 illustrated in FIG. 11 may be provided by the operation of a processing device. Not all of the components of the processing system 1 illustrated in FIG. 11 are essential, and components of the processing system 1 may be added or removed as appropriate. Furthermore, at least a portion of the functions of the processing system 1 may be realized by a computer on the cloud.

The imaging unit 401 captures an image of the plant while a worker is performing work on the plant. The detection unit 402 analyzes the image of the plant captured by the imaging unit 401 to detect the presence or absence of pests or diseases on the plant, and outputs the detection result of the presence or absence of pests or diseases on the plant. The calculation unit 403 calculates the detection position where the detection unit 402 has detected the presence or absence of pests or diseases on the plant as three-dimensional position information including a planar position and a height position. The storage unit 404 stores the detection result of the detection unit 402 and the three-dimensional position information calculated by the calculation unit 403 in association with each other. Every time the calculation unit 403 calculates three-dimensional position information, the calculation unit 403 associates the detection result of the detection unit 402 with the three-dimensional position information and stores them in the storage unit 404.

The calculation unit 403 acquires imaging position information indicating the position where the plant is imaged and work type information indicating the type of work performed by the worker on the plant. The imaging position information may be GPS information of the terminal device 10 or may be position information calculated based on the GPS information of the terminal device 10. The calculation unit 403 determines a planar position in the three-dimensional position information based on the imaging position information. The calculation unit 403 determines the height position in the three-dimensional position information based on the work type information. According to the processing system 1, it is possible to determine the height position in the three-dimensional position information based on work type information indicating the type of work that a worker performs on plants, and thus the height position in the three-dimensional position information can be easily determined.

The imaging unit 401 images the plants and objects while a worker is performing work on the plants, and generates images of the plants and objects. The calculation unit 403 detects an object from the images of the plants and objects, and determines a work location of the worker in the height direction based on the height of the object. The calculation unit 403 acquires imaging position information indicating the position where the plant is imaged and work location information indicating the work location of the worker in the height direction. The calculation unit 403 determines a planar position in the three-dimensional position information based on the imaging position information. The calculation unit 403 determines the height position in the three-dimensional position information based on the work location information. In this way, the imaging unit 401 images the plants and objects while the worker is performing work on the plants, and the calculation unit 403 detects the objects from the images of the plants and objects, and determines the height position based on the objects. According to the processing system 1, it is possible to determine the height position in the three-dimensional position information based on the work location information indicating the work location of the worker in the height direction, and thus the height position in the three-dimensional position information can be easily determined.

The detection unit 402 determines whether to detect the presence or absence of pests or diseases on the plant, based on the past detection result stored in the storage unit 404 and the three-dimensional position information associated with the past detection result. The past detection result is a detection result within a time frame or a period prior to the current time. For example, the detection unit 402 may not detect the presence or absence of pests or diseases on the plant when the detection result and three-dimensional position information overlap the past detection result and three-dimensional position information associated with the past detection result. This makes it possible to reduce the processing load for detecting the presence or absence of pests or diseases on the plant.

### <Computer-Readable Recording Medium>

A program for causing an information processing device or any other machine or device (hereinafter referred to as a computer or the like) to implement any of the functions described above may be recorded in a recording medium readable by the computer or the like. The functions can be provided by causing the computer or the like to load the program from the recording medium and to execute the program.

Here, the recording medium readable by the computer or the like refers to a recording medium capable of storing information such as data or programs by an electrical, magnetic, optical, mechanical, or chemical action in such a manner that the computer or the like can read the information from the recording medium. Among such recording media, those which can be removed from the computer or the like include, for example, flexible disks, magneto-optical disks, CD-ROMs, CD-R/Ws, DVDs, Blu-ray discs, and memory cards such as flash memories. Recording media fixed to the computer or the like include hard disks, ROMs, and the like.

### <Supplementary Note 1>

A processing device (1, 10) including:
an imaging unit (23, 401) that images a plant while a worker is performing work on the plant to generate an image of the plant;
a detection unit (103, 402) that analyzes the image of the plant to detect the presence or absence of a pest or disease on the plant and outputs a detection result; and
a calculation unit (103, 403) that calculates a detection position where the presence or absence of the pest or disease on the plant is detected as three-dimensional position information including a planar position and a height position.

### <Supplementary Note 2>

The processing device (1, 10) according to Supplementary Note 1, in which the calculation unit (103, 403) acquires imaging position information indicating a position where the plant is imaged and work type information indicating a type of the work, determines the planar position based on the imaging position information, and determines the height position based on the work type information.

### <Supplementary Note 3>

The processing device (1, 10) according to Supplementary Note 1, in which
the imaging unit (23, 401) images the plant and an object while the worker is performing the work on the plant, and

the calculation unit (103, 403) detects the object from the image of the plant and an image of the object, and determines the height position based on the object.

### <Supplementary Note 4>

The processing device (1, 10) according to any one of Supplementary Notes 1 to 3, further including:
a storage unit (101, 404) in which the detection result and the three-dimensional position information are stored in association with each other,
in which the detection unit (103, 402) determines whether to detect the presence or absence of the pest or disease on the plant based on the detection result within a time frame or a period prior to a current time stored in the storage unit and the three-dimensional position information associated with the detection result within the time frame or the period.

### <Supplementary Note 5>

The processing device (1, 10) according to any one of Supplementary Notes 1 to 4, in which the imaging unit (23, 401) is a wearable camera worn by the worker.

### <Supplementary Note 6>

A processing method executed by a processing device (1, 10), the processing method including:
imaging a plant while a worker is performing work on the plant to generate an image of the plant;
analyzing the image of the plant to detect the presence or absence of a pest or disease on the plant and outputting a detection result; and
calculating a detection position where the presence or absence of the pest or disease on the plant is detected as three-dimensional position information including a planar position and a height position.

### <Supplementary Note 7>

A program for causing a computer to execute:
imaging a plant while a worker is performing work on the plant to generate an image of the plant;
analyzing the image of the plant to detect the presence or absence of a pest or disease on the plant and outputting a detection result; and
calculating a detection position where the presence or absence of the pest or disease on the plant is detected as three-dimensional position information including a planar position and a height position.

### REFERENCE SIGNS

1: Processing system
10: Terminal device
11: Mobile terminal
12: Wearable terminal
15: Camera
21: Target field selection unit
22: Determination unit
23: Imaging unit
24: Pest and disease detection unit
25: Information processing unit
100: Server
101: Storage unit
102: Work determination unit
103: AI detection unit
104: Production management unit
401: Imaging unit
402: Detection unit
403: calculation unit
404: Storage unit

## Claims

1. A processing device comprising:
an imaging unit that images a plant while a worker is performing work on the plant to generate an image of the plant;
a detection unit that analyzes the image of the plant to detect the presence or absence of a pest or disease on the plant and outputs a detection result; and
a calculation unit that calculates a detection position where the presence or absence of the pest or disease on the plant is detected as three-dimensional position information including a planar position and a height position.

2. The processing device according to claim 1, wherein the calculation unit acquires imaging position information indicating a position where the plant is imaged and work type information indicating a type of the work, determines the planar position based on the imaging position information, and determines the height position based on the work type information.

3. The processing device according to claim 1, wherein
the imaging unit images the plant and an object while the worker is performing the work on the plant, and
the calculation unit detects the object from the image of the plant and an image of the object, and determines the height position based on the object.

4. The processing device according to claim 1, further comprising:
a storage unit in which the detection result and the three-dimensional position information are stored in association with each other,
wherein the detection unit determines whether to detect the presence or absence of the pest or disease on the plant based on the detection result within a time frame or a period prior to a current time stored in the storage unit and the three-dimensional position information associated with the detection result within the time frame or the period.

5. The processing device according to any one of claims 1 to 4, wherein the imaging unit is a wearable camera worn by the worker.

6. A processing method executed by a processing device, the processing method comprising:
imaging a plant while a worker is performing work on the plant to generate an image of the plant;
analyzing the image of the plant to detect the presence or absence of a pest or disease on the plant and outputting a detection result; and
calculating a detection position where the presence or absence of the pest or disease on the plant is detected as three-dimensional position information including a planar position and a height position.

7. A program for causing a computer to execute:
imaging a plant while a worker is performing work on the plant to generate an image of the plant;
analyzing the image of the plant to detect the presence or absence of a pest or disease on the plant and outputting a detection result; and
calculating a detection position where the presence or absence of the pest or disease on the plant is detected as three-dimensional position information including a planar position and a height position.
